# EUROPEAN PATENT APPLICATION

(11) **EP 3 340 408 A1**
(43) Date of publication of application: **27.06.2018**
(21) Application number: 16206314.3
(22) Date of filing: 22.12.2016
(51) Int. Cl.: H02G 5/00, H02G 5/06

(54) **AN ELECTRICALLY CONDUCTIVE BAR FITTED WITH A TIE AND/OR A STRUT**

(71) Applicant: General Electric Technology GmbH, 5400 Baden (CH)
(72) Inventor: GUILLON, Emmanuel, 73190 Curienne (FR)
(74) Representative: Fischer, Michael Maria

(57) **Abstract**

The invention relates to an electrically conductive bar (3) extending around a longitudinal axis (4) for inserting in a casing (2). The bottom portion (35) of the bar is fitted with a tie (5) configured to reduce the bending of the bar (3) under the effect of its own weight. In a variant, or in addition, the top portion (33) of the bar is fitted with a strut in order to reduce the bending of the bar (3) under the effect of its own weight.

## Description

### TECHNICAL FIELD

The invention relates to a medium- or high-voltage line for conducting electricity in a gas-insulated substation.

Such a substation comprises electrical equipment of the disconnector, circuit breaker, or transformer type.

Such electrical equipment is surrounded by a leaktight casing containing a dielectric gas such as SF₆ in order to be electrically insulated from the environment outside the casing.

### STATE OF THE PRIOR ART

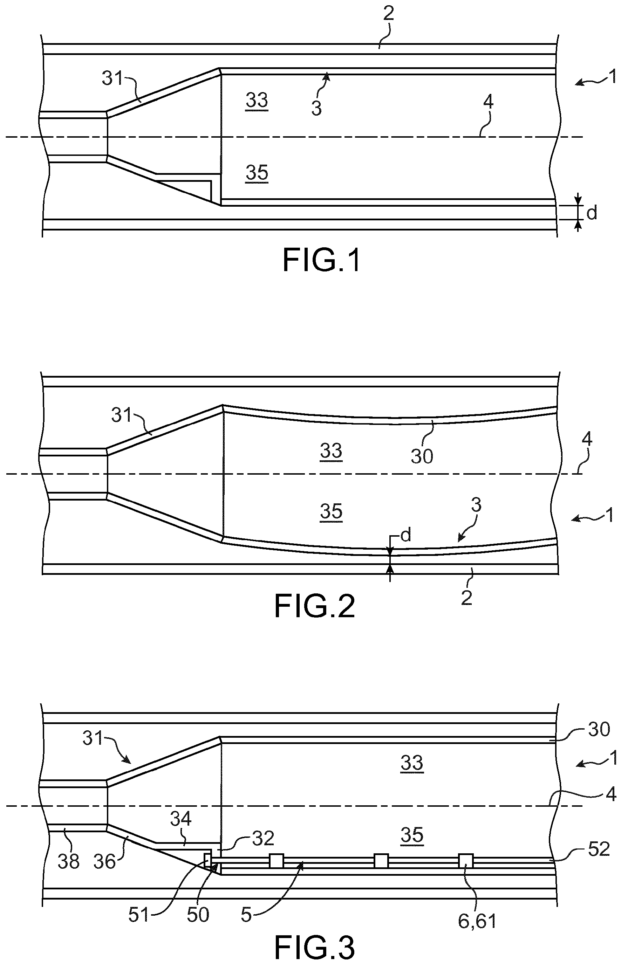

Figure 1 shows a portion of a medium- or high-voltage electricity conduction line 1 comprising an electrically conductive bar 3 and a casing 2 of electrically conductive material surrounding the bar 3.

The bar 3 has a top portion 33 and a bottom portion 35 that are situated above and below its longitudinal axis 4 when it is in service in the line 1.

In practice, the bar 3 deforms in bending under the effect of its own weight, as shown in Figure 2. The distance d between the bar 3 and the casing 2 is then reduced in the central region of the bar, such that the bottom portion 35 of the bar 3 comes too close to the casing 2. There is then an increased risk of a short circuit between the bar 3 and the casing 2.

### SUMMARY OF THE INVENTION

The invention seeks to remedy that drawback.

In this respect, the invention provides an electrically conductive bar extending around a longitudinal axis for inserting in a casing surrounding the bar, the bar having a top portion and a bottom portion situated above and below the longitudinal axis,
the bar being characterized in that it is provided in the bottom portion with at least one tie oriented longitudinally and arranged to reduce the bending of the bar under the effect of its own weight; and/or
in that it is provided in the top portion with at least one strut for reducing the bending of the bar under the effect of its own weight.

The deformation of the bar by the tie and/or by the strut reduces the bending of the bar under the effect of its own weight in order to hold it far enough away from its casing. The risk of a short circuit between the bar and the casing is thus reduced.

Advantageously, the force exerted by the tie and/or by the strut on the bar is easier to adjust than adjusting an arching force on the bar in order to deform it plastically prior to inserting it in the casing so as to reduce its bending under the effect of its own weight.

The invention also provides a hollow bar, the tie and/or the strut being situated inside the bar.

The invention also provides a bar wherein a guide configured to hold the tie and/or the strut along the longitudinal axis against the bar.

The invention also provides a bar wherein the guide comprises guide blocks secured to the casing and spaced apart from one another along the longitudinal axis.

The invention also provides a bar wherein the guide extends continuously with the bar along the longitudinal axis.

The invention also provides a bar wherein the tie and/or the strut comprises a rod extending along the longitudinal axis.

The invention also provides a bar wherein the tie comprises a cable.

The invention also provides a bar wherein the tie includes at least one wheel around which the cable is wound, the cable being fastened to the bar at each of its opposite ends. The wheel serves to vary the length of the cable as a function of the temperature of the bar.

The wheel is particularly useful when the cable is made of a material having a coefficient of thermal expansion that is less than that of the material of the bar.

The invention also provides a portion of an electricity conduction line comprising a bar as defined above, together with a casing extending along the longitudinal axis and surrounding the bar.

The invention also provides a method of manufacturing a portion of an electricity conduction line as defined above, wherein the tie and/or the strut is/are prestressed prior to being inserted in the casing in order to reduce the bending of the bar under the effect of its own weight when it is in the casing.

### BRIEF DESCRIPTION OF THE DRAWINGS

- Figure 1, described above, is a fragmentary diagrammatic longitudinal section view of a rectilinear bar of known structure;
- Figure 2, described above, is a fragmentary diagrammatic longitudinal section view of a bar of known structure, sagging under the effect of its own weight;
- Figure 3 is a fragmentary diagrammatic longitudinal section view of a bar in a first embodiment of the invention;
- Figure 4 is a fragmentary diagrammatic longitudinal section view of the bar showing the deformation exerted by a tie on the bottom portion of the bar in order to reduce the bending due to its own weight;
- Figure 5 is a fragmentary diagrammatic longitudinal section view of a bar in a second embodiment of the invention;
- Figure 6 is a fragmentary diagrammatic longitudinal section view of a bar in a third embodiment of the invention; and
- Figure 7 is a fragmentary diagrammatic longitudinal section view of a bar in a fourth embodiment of the invention.

### DETAILED DESCRIPTION OF PARTICULAR EMBODIMENTS

Figure 3 shows a portion of an electricity conduction line 1 comprising an electrically conductive bar 3 for conveying medium- or high-voltage electricity within a gas-insulated substation (not shown).

The conductive line 1 comprises a casing 2 surrounding the conductive bar 3. The casing 2 contains a dielectric gas, such as SF₆.

The casing 2 is in the shape of a cylindrical tube around a longitudinal axis 4. The conductive bar 3 is also substantially a body of revolution about the longitudinal axis 4.

The bar 3 has a top portion 33 and a bottom portion 35 that are situated above and below the longitudinal axis 4, when the bar 3 is in its service position in the electricity conduction line 1.

The bar 3 has a body 30 extended at its first end by a first endpiece and extended at its opposite second end opposite from the first end by a second endpiece, the first endpiece being given reference 31 in Figure 3.

The body 30 is a hollow cylinder arranged coaxially in the casing 2 about the longitudinal axis 4.

The first endpiece 31 has a funnel-shaped portion 36 and a first connection portion 38 that are both bodies of revolution about the longitudinal axis 4. The funnel-shaped portion 36 is situated between the body 30 and the connection portion 38.

The connection portion 38 serves to connect the bar 3 electrically to another bar or to other electrical equipment of the gas-insulated substation.

In its bottom portion 35 only, the first endpiece 31 also has a plane portion 34 and a rim 32. The plane portion 34 is situated between the rim 32 and the funnel-shaped portion 36. The rim 32 is oriented normally to the longitudinal axis 4.

The second endpiece is of the same type and of the same structure as the first endpiece 31.

In order to reduce the bending of the bar 3 under the effect of its own weight, its bottom portion 35 is fitted with a tie 5.

The tie 5 is situated inside the body 30 and it runs along the inside face of the body 30 along the longitudinal axis 4.

It has a first end 50 that passes through the first endpiece 31 via the rim 32. This first end 50 has a thread. It is clamped against the rim 32 by a nut 51. The nut 51 forms an element for retaining the tie relative to the bar 3.

The tie 5 has a second end, opposite from the first end 50 along the axis 4, that has the same structure as the first end 50 and that is fastened to the second endpiece in analogous manner. The tie 5 is thus held at each of its ends relative to the bar 3.

The tie 5 is put under tension at its ends in order to exert a compression force on the bottom portion 35 of the bar so as to reduce its bending under its own weight. In reaction, the bar 3 exerts a traction force on the tie 5.

The tie 5 is a rod 52. It is held against the inside face of the body 30 by a series of blocks 61 spaced about the longitudinal axis 4 and acting as a guide 6 for guiding the rod 52 relative to the bar 3.

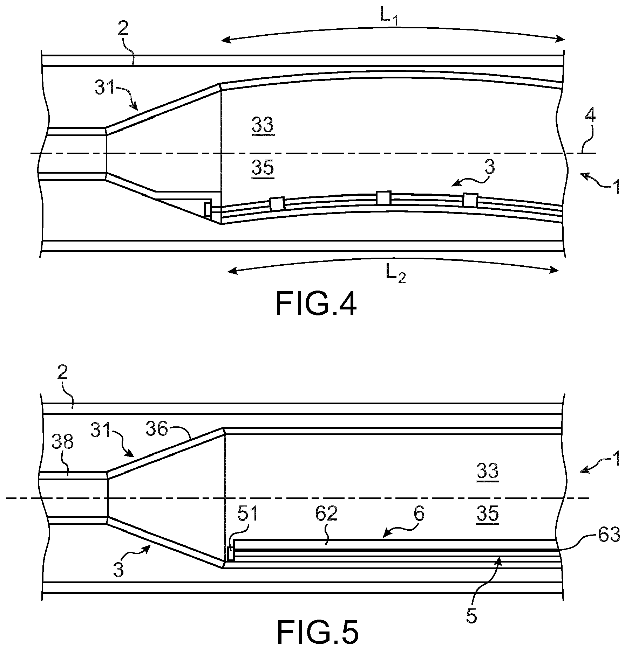

In Figure 4, the tie 5 deforms the bar 3 so as to compress its bottom portion 35, thereby tending to shorten the length L₂ of the bottom portion 35 compared with the length L₁ if the top portion 33. The central portion of the bar then tends to rise under the effect of the tension in the tie 5, opposing the bending of the bar 3 due to its own weight.

The tie 5 is prestressed by the rim 32 against which the nut 51 is tightened, which tightening may be performed before the bar 3 is inserted in the casing 2.

In the second embodiment that is shown in Figure 5, the line 1 has substantially the same structure as the line of the first embodiment. The body 30 nevertheless includes a profile 62 forming a tunnel relative to the remainder of the body 30 for housing the tie 5, as a replacement for the blocks 61.

The profile 62 is fabricated integrally with the body 30, in particular by extrusion.

The profile 62 defines a housing 63 extending along the longitudinal axis 4, and in which the tie 5 is guided along the body 30.

The first endpiece 31 has neither the rim for co-operating with the nut 51 nor a plane portion. The other endpiece is of structure analogous to the structure of the first endpiece 31.

The nut 51 holds the tie 5 at its first end 50 by bearing against a first end of the profile 62. The tie 5 is held at its second end in the same manner as at its first end 50.

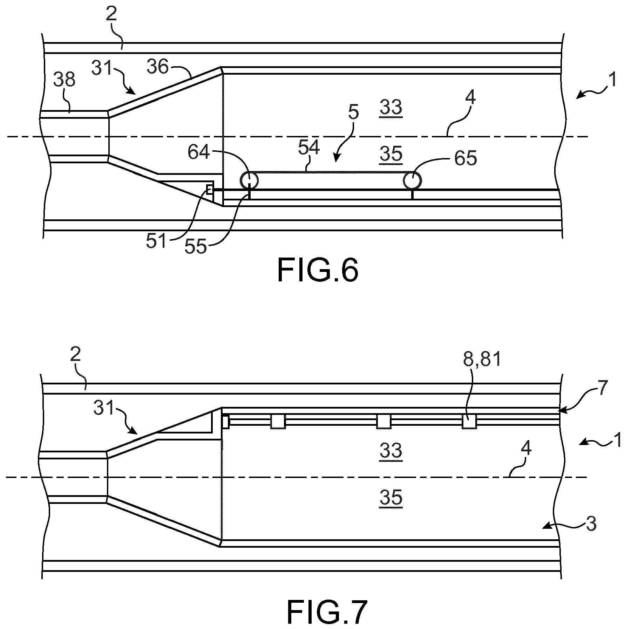

In the third embodiment shown in Figure 6, the line 1 has substantially the same structure as that of the line of the first embodiment, however the tie 5 comprises a cable 54.

This cable 54 extends from the first end of the body 30 to which it is fastened, to the second end of the body (not shown), to which it is also fastened. The cable 52 is held at both ends of the body 30 along the longitudinal axis 4 and it is put under tension in order to reduce the bending of the bar 3. By way of example, the two free ends of the cable 54 may be provided with threaded tips that are clamped to the body 30 by means of respective nuts 51.

Between its two ends, the cable 52 is wound around a first wheel 64 and a second wheel 65. The cable 52 has a bottom strand that extends from the first end of the cable 52 to the bottom portion of the first wheel 64 and on the bottom portion of the second wheel 65, prior to being wound around the second wheel 65 so as to form a top strand that extends towards the first wheel 64, around which it is also wound. The cable 52 then goes to the second end of the body.

The cable 52 is made of a material presenting a coefficient of thermal expansion that is less than that of the material constituting the bar 3.

The wheel 64 is fastened to the body 30 by a support 55. It acts as a pulley relative to the cable 54. Likewise, the second wheel 65 is fastened by a support 55 to the body.

The wheels 64 and 65 serve to vary the length of the cable 52 as a function of temperature. They avoid excessive arching of the bar 3 as a result of differential expansion of the bar 3 and of the cable 52.

In this third embodiment, the first endpiece 31 has a connection portion 38 and a funnel-shaped portion 36, a plane portion 34 and a rim 32.

In the fourth embodiment shown in Figure 7, the electricity conduction line 1 has a strut 7 instead of a tie 5.

The strut 7 is situated in the top portion 33 of the bar 3, inside the body 30 along which it runs. The strut 7 is held against the body 30 by a series of blocks 81 that are spaced apart from one another along the longitudinal axis 4 and that act as a guide 8 for guiding the strut 7 relative to the bar 3.

The strut 7 exerts a lengthening force on the bar along the longitudinal axis 4 in order to reduce the bending of the bar 3 under the effect of its own weight when it is in its in-service position in the line 1. In reaction, the bar 3 exerts a force that tends to compress the strut 7.

A bar 3 may be fitted both with a tie 5 in its bottom portion 33 and also with a strut 7 in its top portion 35 in order to reduce the bending of the bar 3 under its own weight.

It is possible to take account of various factors influencing the bending of the bar 3 in order to adjust the force exerted by the tie 5 and/or the strut 7 on the bar 3, such as outside temperature, temperature of the electricity conduction line 1 in operation, and/or possible electrodynamic forces between the bar 3 and the casing 2 while the line 1 is in operation.

Advantageously, the material of the tie 5 and/or of the strut 7 is selected so as to limit differential thermal expansion in the line 1.

## Claims

1. An electrically conductive bar (3) extending around a longitudinal axis (4) for inserting in a casing (2) surrounding the bar (3), the bar (3) having a top portion (33) and a bottom portion (35) situated above and below the longitudinal axis (4),
the bar (3) being **characterized in that** it is provided in the bottom portion (35) with at least one tie (5) oriented longitudinally and arranged to reduce the bending of the bar (3) under the effect of its own weight; and/or
**in that** it is provided in the top portion (33) with at least one strut (7) for reducing the bending of the conductive bar (3) under the effect of its own weight.

2. A bar (3) according to the preceding claim, wherein the bar (3) is hollow, the tie (5) and/or the strut (7) being situated inside the bar (3).

3. A bar (3) according to any preceding claim, including a guide (6, 8) configured to hold the tie (5) and/or the strut (7) along the longitudinal axis (4) against the bar (3).

4. A bar (3) according to the preceding claim, wherein the guide (6, 8) comprises guide blocks (61, 81) secured to the casing (2) and spaced apart from one another along the longitudinal axis (4).

5. A bar (3) according to claim 2 or claim 3, wherein the guide (6, 8) extends continuously with the bar (3) along the longitudinal axis (4).

6. A bar (3) according to any preceding claim, wherein the tie (5) and/or the strut (7) comprises a rod (52) extending along the longitudinal axis (4).

7. A bar (3) according to any preceding claim, wherein the tie (5) comprises a cable (54).

8. A bar (3) according to the preceding claim, wherein the tie (5) includes at least one wheel (64) around which the cable (52) is wound, the cable (52) being fastened to the bar at each of its opposite ends.

9. A portion of an electricity conduction line (1) comprising:
a bar (3) according to any preceding claim fitted with a tie and/or a strut; and
a casing (2) extending along the longitudinal axis (4) and surrounding the bar (3).

10. A method of manufacturing a portion of an electricity conduction line (1) according to claim 9, wherein the tie (5) and/or the strut (7) are prestressed prior to being inserted in the casing (2) in order to reduce the bending of the bar (3) under the effect of its own weight when the bar (3) is in the casing (2).
